# EUROPÄISCHE PATENTSCHRIFT

(11) **EP 1 283 759 B1**
(45) Veröffentlichungstag und Bekanntmachung des Hinweises auf die Patenterteilung: **26.10.2005**
(21) Anmeldenummer: 00935096.8
(22) Anmeldetag: 22.05.2000
(51) Int. Cl.: B23P 11/02, B23Q 11/14, H05B 6/38

(54) **SCHRUMPFVORRICHTUNG FÜR EINEN WERKZEUGHALTER**
SHRINKING DEVICE FOR A TOOLHOLDER
DISPOSITIF DE CONTRACTION POUR UN PORTE-OUTIL

(43) Veröffentlichungstag der Anmeldung: 19.02.2003
(60) Teilanmeldung: 04029248.4
(73) Patentinhaber: Haimer GmbH, 86568 Hollenbach-Igenhausen (DE)
(72) Erfinder: HAIMER, Franz, D-86568 Igenhausen (DE); HAIMER, Josef, D-86568 Igenhausen (DE); KÜGLE, Wolfgang, D-86551 Aichach-Griesbeckerzell (DE)
(74) Vertreter: Liska, Horst
(86) Internationale Anmeldenummer: PCT/EP2000/004645
(87) Internationale Veröffentlichungsnummer: WO 2001/089758

(56) Entgegenhaltungen:
- EP-A- 0 437 322
- EP-A- 0 830 917
- DE-A- 19 844 018
- DE-C- 922 700
- DE-U- 29 820 838
- FR-A- 1 524 221
- FR-A- 2 768 071
- US-A- 4 580 616
- US-A- 5 127 780
- US-A- 5 140 666
- US-A- 5 856 716

## Beschreibung

Die Erfindung betrifft eine Schrumpfvorrichtung für wenigstens einen ein Rotationswerkzeug in einer zentrischen Aufnahmeöffnung im Presssitz haltenden Werkzeughalter. Siehe, zum Beispiel, FR 2 768 071.

Es ist bekannt, beispielsweise aus WO94/07646 A1 oder EP 0 830 917 A 1 oder DE 298 20 838 U1, Werkzeughalter, die den Schaft eines Rotationswerkzeugs, beispielsweise eines Bohrers oder eines Fräsers oder dergleichen im Presssitz in einer zentrischen Aufnahmeöffnung halten, im Bereich dieser Aufnahmeöffnung durch Erwärmen aufzuweiten, um den Schaft des Werkzeugs einsetzen oder entnehmen zu können. Als Wärmequelle kann eine in Anlagekontakt mit dem Werkzeughalter zu bringende, elektrische Widerstandsheizmanschette oder eine Gasflamme dienen. Geeignet sind insbesondere mit Wechselstrom oder gepulstem Gleichstrom gespeiste Induktionsspulen, die zentrisch auf den zu erwärmenden Bereich des Werkzeughalters aufgesetzt werden und in dem Werkzeughalter transformatorisch Wirbelströme induzieren. Solche Induktionsheizeinrichtungen haben den Vorteil, dass der Werkzeughalter für den Heizvorgang nicht in Berührungskontakt mit der Spule stehen muss.

Für hinreichend große Wärmedehnungen muss der Werkzeughalter auf mehrere 100°C, beispielsweise 250°C bis 350°C, erwärmt werden. Bei hinreichend leistungsfähigen Heizmitteln kann die Aufwärmphase des Schrumpfvorgangs relativ kurz gehalten werden, womit auch eine Überhitzung des Werkzeughalters oder aber des Werkzeugs vermieden werden kann. Die Abkühlphase des Werkzeughalters ist bei herkömmlichen Schrumpfvorrichtungen jedoch vergleichsweise lang. So ist es bekannt, zur Beschleunigung der Abkühlphase auf dem Werkzeughalter einen Kühlkörper aufzusetzen und diesen Kühlkörper dem von einem Gebläse erzeugten Luftstrom auszusetzen. Trotz der Luftkühlung dauert die Abkühlphase des Schrumpfvorgangs allerdings immer noch mehrere Minuten.

Aufgabe der Erfindung ist es, einen Weg zu zeigen, wie die Schrumpfzeit einer Schrumpfvorrichtung der vorstehend erläuterten Art beträchtlich verkürzt werden kann.

Für die Lösung dieser Aufgabe geht die Erfindung von einer Schrumpfvorrichtung für wenigstens einen ein Rotationswerkzeug in einer zentrischen Aufnahmeöffnung im Presssitz haltenden Werkzeughalter aus, welche eine insbesondere als Induktionsheizvorrichtung ausgebildete Heizvorrichtung zur Wärmedehnung des Werkzeughalters im Bereich der Aufnahmeöffnung hat. Die Erfindung ist dadurch gekennzeichnet, dass zum Kühlen des Bereichs der Aufnahmeöffnung des Werkzeughalters eine Kühlvorrichtung mit wenigstens einer von Kühlflüssigkeit durchströmbaren, in Berührungskontakt auf den Werkzeughalter aufsetzbaren Kühlmanschette vorgesehen ist. Derartige Kühlmanschetten sind beträchtlich kleiner als herkömmliche für Luftkühlung benutzte Kühlkörper und verringern auf Grund der höheren Wärmeaufnahrnekapazität der Kühlflüssigkeit die Abkühlzeit auf Bruchteile einer Minute, beispielsweise 30 Sekunden. Die Arbeitsgeschwindigkeit, mit der Werkzeuge in den Werkzeughalter eingesetzt oder aus ihm entnommen werden können, kann auf diese Weise verglichen mit herkömmlichen Schrumpfvorrichtungen beträchtlich erhöht werden.

Als Kühlflüssigkeit genügt Wasser. Im einfachsten Fall kann die Kühlmanschette an eine Gebäudewasserleitung angeschlossen werden. Um ortsunabhängig von Wasserleitungsanschlüssen eines Gebäudes arbeiten zu können, umfasst die Kühlvorrichtung jedoch bevorzugt ein die Kühlflüssigkeit in einem geschlossenen Kühlkreislauf durch die Kühlmanschette bzw. Kühlmanschetten führendes Kühlaggregat.

Der Schrumpfvorrichtung sind zweckmäßigerweise mehrere Kühlmanschetten zugeordnet, sei es um Kühlmanschetten für unterschiedliche Werkzeughalterdurchmesser betriebsmäßig verfügbar zu haben oder aber um mehrere Werkzeughalter zeitlich überlappend abkühlen zu können. Die Kühlmanschetten können an sich parallel an den Kühlflüssigkeitskreislauf angeschlossen sein, bevorzugt sind die Kühlmanschetten jedoch in Reihe hintereinander im Kühlkreislauf angeordnet, da hierdurch der zur Verbindung erforderliche Leitungsaufwand verringert werden kann.

Die Kühlmanschetten können stationär an der Schrumpfvorrichtung vorgesehen sein; zweckmäßigerweise sind sie jedoch an flexible Kühlflüssigkeitsschläuche angeschlossen und frei beweglich, was die Handhabung erleichtert. Die Kühlmanschette kann auf den heißen Werkzeughalter aufgesetzt werden, ohne dass dieser aus seiner Aufnahme, in welcher er erwärmt wurde, entnommen werden muss, wie dies bei herkömmlichen Schrumpfvorrichtungen mit Luftkühlung erforderlich ist.

In einer bevorzugten Ausgestaltung weist die Schrumpfvorrichtung einen um eine insbesondere vertikale Drehachse drehbaren Drehteller mit mehreren Aufnahmen für Werkzeughalter auf, die in jeweils einer der Aufnahmen gehalten nacheinander durch den Betriebsbereich der Heizvorrichtung und der Kühlvorrichtung bewegbar sind. Auch sind die Kühlmanschette bzw. die Kühlmanschetten an flexible Kühlflüssigkeitsschläuchen angeschlossen, so dass sie der Drehbewegung des Tellers folgen können. Ohne die erwärmten Werkzeughalter aus ihren Aufnahmen nehmen zu müssen, kann die Zeitspanne, in der die erwärmten Werkzeughalter gekühlt werden, bereits zum Aufheizen des nächsten Werkzeughalters genutzt werden.

Der Drehteller hat zweckmäßigerweise eine Drehrichtungssperre, die die Drehbewegung in einer vorbestimmten Drehrichtung, insbesondere vom Bereich der Heizvorrichtung zur Bedienseite der Schrumpfvorrichtung hin blockiert. Erwärmte Werkzeughalter können auf diese Weise nur vom Bediener weg bewegt werden, was die Verletzungsgefahr mindert.

Die Aufnahmen des Drehtellers können betriebsmäßig fest mit dem Drehteller verbunden sein oder aber der Drehteller umfasst Führungen oder Halterungen, in welchen die Aufnahmen für die Werkzeughalter jeweils für sich betriebsmäßig auswechselbar gehalten sind. Um das Wechseln mehrerer Aufnahmen zu erleichtern, ist zweckmäßigerweise eine zur Drehachse des Drehtellers im Wesentlichen zentrische Nabe mit mehreren die Aufnahmen bildenden Aufnahmekörpern vorgesehen, die mit Spiel an der Nabe gehalten sind und in Führungen des Drehtellers geführt sind. Auf diese Weise lassen sich mit einem Handgriff sämtliche Aufnahmen des Drehtellers wechseln. Das Spiel der Aufnahmekörper sorgt dafür, dass sie sich in den Führungen nicht auf Grund von Wärmedehnungen verklemmen können.

In einer vergleichsweise simplen und dennoch einfach und effizient zu bedienenden Ausgestaltung hat die Heizvorrichtung eine an einer vertikalen Führungssäule mitvertikaler Spulenachse verschiebbar geführte Induktionsspuleneinheit, die z.B. über ein flexibles Kabel mit einem zur Säule feststehenden Induktionsstromgenerator verbunden ist. An der Induktionsspuleneinheit ist ein manuell zu betätigender Tastschalter angeordnet, mittels dem die Induktionsstromspeisung der Induktionsspuleneinheit wenigstens für eine begrenzte Zeitspanne frei wählbar ein- und ausschaltbar ist. In dieser für Einhandbedienung geeigneten Ausgestaltung wird der Induktionsstrom manuell nur so lange eingeschaltet, bis sich das Werkzeug in die Aufnahmeöffnung des Werkzeughalters einschieben lässt. Der Werkzeughalter ist hierzu mit vertikaler Achse angeordnet, so dass das Werkzeug entweder auf Grund seines Gewichts oder unter manueller Nachhilfe in die Aufnahmeöffnung eintauchen kann. Der Werkzeughalter wird also nur auf das gerade notwendige Maß erwärmt, was einerseits Überhitzung des Werkzeughalters vermeidet und andererseits kurze Kühlzeiten erlaubt. Es versteht sich allerdings, dass der Induktionsstromgenerator eine Betätigungszeitgrenze vorgibt, um Überhitzungsschäden bei Unachtsamkeit auszuschließen.

Die Induktionsspuleneinheit ist bevorzugt mittels einer gegen Federvorspannung lösbaren Arretierungsklemmvorrichtung an der Führungssäule in einer wählbaren Vertikalposition arretierbar. Da die Arretierungsklemmvorrichtung im nicht betätigten Zustand auf Grund von Federkräften klemmt, ist unbeabsichtigtes Lösen ausgeschlossen. Für eine Einhandbedienung kann die Arretierungsklemmvorrichtung einen in Einhandbedienungsnähe zum Tastschalter angeordneten Handhabungsgriff zum Lösen der Arretierung aufweisen.

Die Kühlmanschette muss zwei Forderungen erfüllen. Sie muss zum einen für einen guten Wärmeübergang vom Werkzeughalter auf die Kühlflüssigkeit sorgen, und sie muss zum anderen trotz gewisser Toleranzen der für sie bestimmten Anlageflächen des Werkzeughalters für einen möglichst großflächigen Anlagekontakt sorgen, und zwar selbst dann, wenn, wie dies bei Werkzeughaltern vielfach üblich ist, die Anlagefläche mehr oder weniger konisch geformt ist. Diesen Forderungen genügt die Kühlmanschette, wenn sie ein zur Berührungsanlage an dem Werkzeughalter bestimmtes Hülsenelement aufweist, welches einen radial durchgehenden und axial über die gesamte Hülsenlänge sich erstreckenden Schlitz aufweist und fest mit Wänden eines Kühlflüssigkeitskanals verbunden ist oder Wände oder Wandabschnitte eines Kühlflüssigkeitskanals integral bildet. Auf Grund des Schlitzes kann sich das Hülsenelement dem Werkzeughalter anpassen. Da das Hülsenelement in unmittelbarem Wärmekontakt mit der Kühlflüssigkeit steht, ist für einen optimalen Wärmeübergang gesorgt. Bei dem Kühlflüssigkeitskanal kann es sich um eine an dem Hülsenelement angelötete oder angeschweißte oder in sonstigem Wärmekontakt an dem Hülsenelement befestigte Rohrschlange handeln. Günstiger ist es, wenn der Kühlflüssigkeitskanal durch integrale Flächenbereiche des Hülsenelements begrenzt ist.

Mechanisch stabile Ausführungsformen, die auch größere Wärmespannungen aufnehmen können, erhält man, wenn das zur Berührungsanlage an dem Werkzeughalter bestimmte innere Hülsenelement radial außen von einem äußeren Hülsenelement abgedichtet überdeckt ist, wobei aus den vorgenannten Gründen in dem inneren oder/und dem äußeren Hülsenelement wenigstens eine Nut zur Bildung des Kühlflüssigkeitskanals integral eingeformt ist. Die Nut ist zweckmäßigerweise meanderförmig in das innere oder/und das äußere Hülsenelement eingeformt, was vergleichsweise große Wärmetauschflächen ermöglicht. Die Dicke zwischen benachbarten nebeneinander verlaufenden Abschnitten der Nut oder/und die Dicke des Hülsenelements im Bereich des Bodens der Nut ist zweckmäßigerweise kleiner als die Querabmessung der Nut radial oder/und axial zur Kühlmanschette. Derartige Hülsenelemente sind verhältnismäßig biegeweich und können sich besonders gut der Außenmantelkontur des Werkzeughalters anpassen. Die Nut ist bevorzugt am Außenmantel des inneren Hülsenelements vorgesehen, während das äußere Hülsenelement einen zur Außenmantelkontur des inneren Hülsenelements engpassend komplementären Innenmantel hat. Eine solche Nut lässt sich nicht nur einfach herstellen, sondern hat auch den Vorteil, dass sie nahe dem Werkzeughalter verläuft, was den Wärmeübergang erleichtert.

Das äußere Hülsenelement kann als ringförmig geschlossene, im Wesentlichen zylindrische Hülse ausgebildet und damit leicht herstellbar sein. Es genügt, wenn das innere Hülsenelement flexibel ist, was durch eine geeignete gummielastische Dichtung zwischen den beiden Hülsenelementen ohne weiteres ermöglicht wird. Das äußere Hülsenelement kann dann steif sein, so dass es auch rauher Behandlung im Betrieb gewachsen ist.

In einer Variante kann sowohl das innere als auch das äußere Hülsenelement miteinander fluchtend je einen sowohl axial als auch radial durchgehenden Schlitz aufweisen. Eine solche Kühlmanschette passt sich dann insgesamt Konturtoleranzen des Werkzeughalters an, und zwar selbst dann, wenn das innere und das äußere Hülsenelement als Konushülsen ausgebildet sind. Es hat sich in diesem Zusammenhang als zweckmäßig erwiesen, wenn der Schlitz bzw. die Schlitze der Kühlmanschette durch Federmittel in Umfangsrichtung in Richtung seiner Verengung vorgespannt ist, um auch bei vergleichsweise flexiblen Hülsenelementen für einen festen Anlagekontakt zu sorgen.

Alternativ zu der vorstehend erläuterten geschlitzten Kühlmanschette kann diese auch mehrere in Umfangsrichtung benachbarte Hülsensegmente aufweisen, von denen jedes fest mit Wänden eines Kühlflüssigkeitskanalabschnitts verbunden ist oder Wände oder Wandabschnitte des Kühlflüssigkeitskanalabschnitts bildet. Die Hülsensegmente sind in Umfangsrichtung elastisch miteinander verbunden und auch die in den einzelnen Hülsensegmenten vorgesehenen Kühlflüssigkeitskanalabschnitte sind ihrerseits zur Bildung des Kühlflüssigkeitskanals miteinander verbunden, insbesondere in Reihe miteinander verbunden. Eine solche segmentierte Kühlmanschette kann sich besonders gut der Umfangskontur des Werkzeughalters anpassen. Für die elastische Verbindung der Hülsensegmente kann eine in einer Nut der Hülsensegmente sitzende Ringfeder vorgesehen sein, die auch zugleich die Hülsensegmente axial zueinander fixiert.

Wie bereits vorangegangen für geschlitzte Hülsenelemente erläutert, kann auch bei Hülsensegmenten jeder Kühlflüssigkeitskanalabschnitt durch ein beispielsweise meanderförmiges Rohr oder eine in ein inneres oder ein äußeres Hülsensegment eingeformte Nut gebildet sein. Auch hier ist die Nut zweckmäßigerweise in das innere Hülsensegment eingeformt. Es wird auf die Erläuterungen zu Ausgestaltungen mit geschlitzten Hülsenelementen Bezug genommen.

Die Induktionsspuleneinheit der Induktionsheizvorrichtung sollte so gestaltet sein, dass sie das Magnetfeld auf dem Werkzeughalter konzentriert. Herkömmliche lnduktionsspuleneinheiten haben deshalb zumeist eine entlang des Außenumfangs der Induktionsspule axial und entlang zumindest einer der beiden axialen Endflächen der Induktionsspule radial sich erstrecktende Jochanordnung aus ferromagnetischem Material, die für eine Bündelung des Magnetfelds im Inneren der Induktionsspule sorgt. Zur Anpassung der Induktionsspuleneinheit an unterschiedliche Durchmesser von Werkzeughaltern sind herkömmlich entweder Teile der Jochanordnung oder aber die gesamten Induktionsspuleneinheiten auswechselbar. In einer bevorzugten Ausgestaltung einer solchen Induktionsspuleneinheit, die auch bei anderen als den vorangegangen erläuterten Schrumpfvorrichtungen zum Einsatz kommen kann und damit selbständige erfinderische Bedeutung hat, ist vorgesehen, dass der dem Werkzeugeinsteckende benachbarte oder/und der zum Werkzeugeinsteckende entfernt gelegene Bereich der ferromagnetischen Jochanordnung mehrere radial über den Innenumfang der Induktionsspule nach innen vorstehende, relativ zueinander beweglich geführte Jochelemente aus ferromagnetischem Material aufweist, deren radialer Überstand über den Innenumfang der Induktionsspule betriebsmäßig änderbar ist. Auf diese Weise lässt sich die zur Aufnahme des Werkzeugs bzw. des Werkzeughalters bestimmte Öffnung der Jochanordnung der aktuellen Größe des Werkzeugs bzw. des Werkzeughalters anpassen, ohne dass die Induktionsspuleneinheit oder Teile hiervon gewechselt werden müssten. Die Induktionsspuleneinheit lässt sich damit universell einsetzen.

Die Jochelemente können relativ zueinander verschiebbar oder auch schwenkbar geführt sein, wobei sie sich zur besseren Führung des Magnetflusses zweckmäßigerweise überlappen.

Es könnte daran gedacht werden, die Jochelemente jeweils für sich einzeln zu verstellen. Bedienungsfreundlicher sind Varianten, bei welchen die Jochelemente mittels eines gemeinsamen, gleichachsig zur Induktionsspule drehbaren Steuerelements, welches über Steuerflächen-Nockenfolger-Anordnungen mit den Jochelementen gekuppelt ist, verstellbar sind. Mittels dieses beispielsweise als achsnormal zur Induktionsspule angeordneter Steuerscheibe ausgebildeten Steuerelements lässt sich die lichte Öffnungsweite der Jochanordnung betriebsmäßig an den aktuell zu schrumpfenden Werkzeughalter anpassen.

Nachfolgend werden Ausführungsbeispiele der Aspekte der Erfindung anhand einer Zeichnung erläutert. In der Zeichnung zeigt:
- Fig. 1: eine perspektivische Darstellung eines Ausführungsbeispiels eines erfindungsgemäßen Schrumpfgeräts für schrumpfbare Werkzeughalter rotierender Werkzeuge;
- Fig. 2: eine Schnittansicht durch eine Induktionsspuleneinheit des Schrumpfgeräts, gesehen entlang einer Linie II-II in Fig. 1;
- Fig. 3: einen Detailschnitt durch die Induktionsspuleneinheit;
- Fig. 4: eine teilweise geschnittene Seitenansicht einer Kühlmanschette des Schrumpfgeräts;
- Fig. 5: einen Axiallängsschnitt durch die Kühlmanschette, gesehen entlang einer Linie V-V aus Fig. 6;
- Fig. 6: einen Axialquerschnitt durch die Kühlmanschette, gesehen entlang einer Linie VI-VI in Fig. 5;
- Fig. 7: eine perspektivische Darstellung einer Variante der Kühlmanschette;
- Fig. 8: einen Axialquerschnitt durch die Kühlmanschette, gesehen entlang einer Linie VIII-VIII in Fig. 7;
- Fig. 9: eine perspektivische Darstellung eines inneren Hülsenelements der Kühlmanschette aus Fig. 7;
- Fig. 10: eineteilweise aufgebrochene perspektivische Darstellung einer weiteren Variante einer Kühlmanschette;
- Fig. 11: eine teilweise aufgebrochene Axialansichtder Kühlmanschette aus Fig. 10;
- Fig. 12: einen Axiallängsschnitt durch eine in dem Schrumpfgerät der Fig. 1 verwendbare Induktionsspuleneinheit mit verstellbarer Jochanordnung;
- Fig. 13: einen Detailschnitt durch die Induktionsspufeneinheit aus Fig. 12;
- Fig. 14: eine axiale Draufsicht auf die Induktionsspuleneinheit der Fig.. 12;
- Fig. 15: eine Detailansicht von Jochelementen der Induktionsspuleneinheit aus Fig. 12;
- Fig. 16 und: 17 schematische Axialansichten einer in der Induktionsspulen einheit gemäß Fig. 12 verwendbaren Variante einer verstellbaren Jochanordnung;
- Fig. 18: eine schematische Schnittansicht der Jochanordnung, gesehen entlang einer Linie XVIII-XVIII in Fig. 16;
- Fig. 19 und 20: schematische Darstellungen einer weiteren Variante einer in der Induktionsspuleneinheit aus Fig. 12 verwendbaren, verstellbaren Jochanordnung.

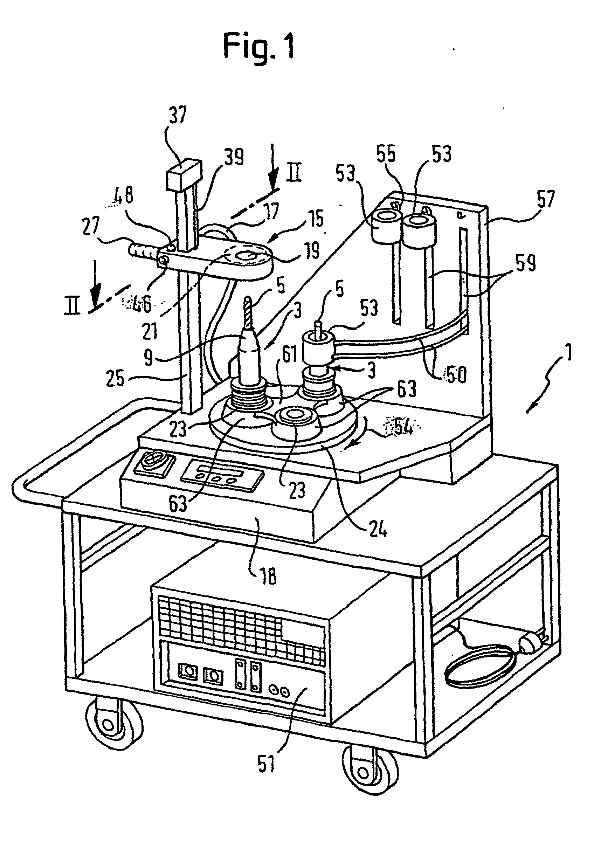

Fig. 1 zeigt ein als Einheit transportables Schrumpfgerät 1 für Werkzeughalter 3 von rotierenden Werkzeugen 5, beispielsweise Bohrern oder Fräsern. Derartige Werkzeughalter haben, wie z. B. Fig. 21 zeigt, einen Anschlussschaft 7, beispielsweise in Form eines Steilkegels oder eines Hohlsteilkegels oder dergleichen, mit welchem sie in eine Werkzeugmaschine zentrisch einspannbar sind sowie dem Anschlussschaft 7 axial gegeriüberliegend einen Werkzeugaufnahmebereich 9 miteiner zentrischen, im Wesentlichen zylindrischen Aufnahmeöffnung 11 für den Schaft 13 des Werkzeugs 5. Der Innendurchmesser der Aufnahmeöffnung 11 ist in einem Spannbereich 12 des Werkzeughalters 3 etwas kleiner als der Außendurchmesser des Schafts 13, mit der Folge, dass der Aufnahmebereich 9 des Werkzeughalters 3 erwärmt werden muss, bevor sich auf Grund der Wärmedehnung der Schaft 13 des Werkzeugs 5 in den Spannbereich 12 der Aufnahmeöffnung 11 einführen lässt. Nach dem Abkühlen des Äufnahmebereichs 9 sitzt der Schaft 13 dann im Presssitz im Werkzeughalter 3.

Das Schrumpfgerät 1 (Fig. 1) ist in der Läge, den Aufnahmebereich 9 des Werkzeughalters 3 innerhalb weniger Sekunden (z. B. 10 Sekunden) hinreichend, beispielsweise auf Temperaturen von 300 °C zu erwärmen und nachfolgend in wiederum vergleichbar kurzer Zeit (z. B. 30 Sekunden) auf Umgebungstemperatur zu kühlen.

Zum Erwärmen des Aufnahmebereichs 9 hat das Schrumpfgerät 1 eine Induktionssputeneinheit 15, die über ein flexibles Kabel 17 aus einem Induktionsstromgenerator 18 gespeist wird. Der Induktionsstromgenerator 18 erzeugt im dargestellten Ausführungsbeispiel Wechselströme oder gepulste Gleichströme mit einer vorzugsweise änderbaren Frequenz zwischen 50 Hz und einigen kHz, wie z. B. 20 kHz, die, wenn die Induktionsspuleneinheit 15 mit dem Innenraum 19 ihrer nachfolgend noch näher erläuterten Induktionsspule 21 im Wesentlichen zentrisch auf den Aufnahmebereich 9 des Werkzeughalters 3 aufgesetzt ist, Wirbelströme in dem Metallkörper des Werkzeughalters 3 induziert und diesen auf induktivem Weg erwärmt. Der Induktionsstromgenerator 18 kann herkömmlich aufgebaut sein und beispielsweise einen aus einem Gleichstromzwischenkreis gespeisten, in seiner Leistung und seiner Frequenz einstellbaren Frequenzumrichter umfassen.

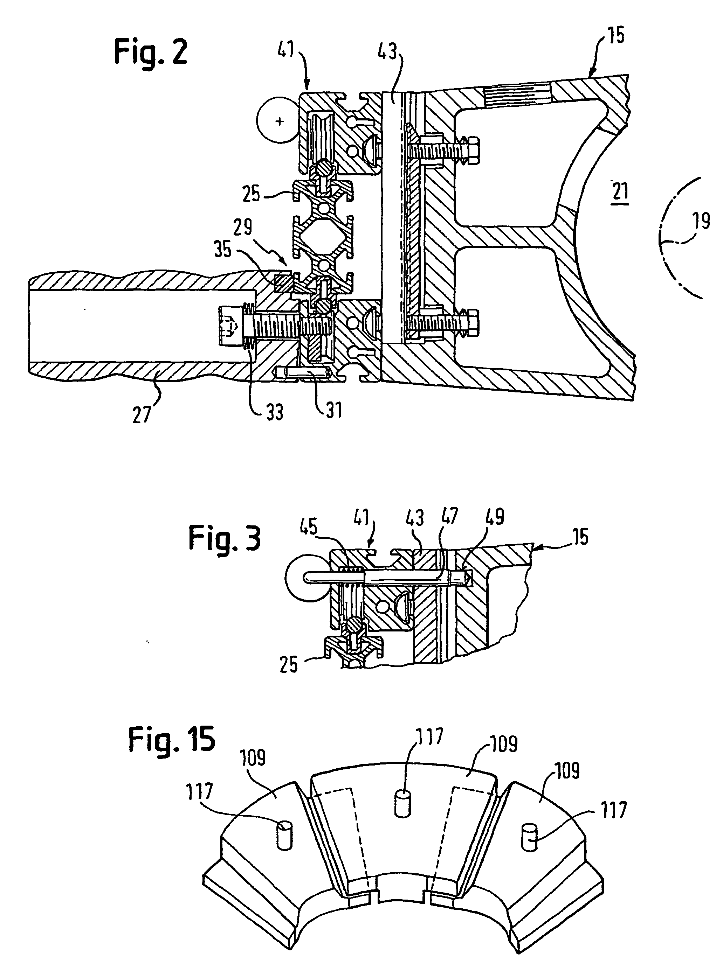

Für den Schrumpfvorgang sitzt der Werkzeughalter 3 mit vertikaler Achse und nach oben gerichteter Aufnahmeöffnung 11 in einer Aufnahme bzw. Öffnung eines Aufnahmekörpers 23 auf einem nachfolgend noch näher erläuterten, um eine vertikale Achse drehbaren Drehteller 24 und zwar in axialer Flucht der Induktionsspule 21 der Induktionsspuleneinheit 15, die ihrerseits an einer vertikalen Führungssäule 25 manuell verschiebbar geführt ist. Die Induktionsspuleneinheit 15 umfasst, wie auch Fig. 2 zeigt, einen Handhabungsgriff 27, der einerseits die Handhabung der Induktionsspuleneinheit 15 während der vertikalen Verstellbewegung erleichtert und andererseits eine im Ruhebetrieb selbsttätig klemmende Reibarretiervorrichtung der Induktionsspuleneinheit 15 zu entsperren vermag. Der Handhabungsgriff 27 ist hierzu an einem Stift 31 um eine quer zur Führungssäule 25 verlaufende Schwenkachse kippbar fixiert und wird von einer an der Induktionsspuleneinheit 15 abgestützten Feder 33 gegen die mit dem Handhabungsgriff 27 überlappende Führungssäule 25 vorgespannt. Im Überlappungsbereich trägt der Handhabungsgriff 27 ein Reibelement 35. Wird der Handhabungsgriff 27 gegen die Vorspannung der Feder 33 gekippt, so hebt das Reibelement 35 von der Führungssäule 25 ab und die Induktionsspuleneinheit 15 kann längs der Führungssäule 25 verschoben werden. Der Handhabungsgriff 27 erlaubt in Einhandbedienung sowohl die Verschiebebedienung der Induktionsspuleneinheit 15 als auch das Lösen der Klemmarretierungsvorrichtung 29. Um die Handhabung weiter zu erleichtern, ist am oberen Ende der Führungssäule 25 ein Federmotor 37 (Fig. 1) angeordnet, der eine nicht näher dargestellte Seilwickeltrommel mit einem längs der Führungssäule 25 zur Induktionsspuleneinheit 15 geführten Seil in Aufwickelrichtung antreibt. Der Federmotor 37 kompensiert zumindest teilweise das Gewicht der Induktionsspuleneinheit 15.

Wie die Figuren 2 und 3 zeigen, ist die Induktionsspuleneinheit 15 betriebsmäßig abnehmbar an der Führungssäule 25 gehalten, so dass der Induktionsstromgenerator 18 mit unterschiedlichen Induktionsspuleneinheiten 15 verbunden werden kann. Der Handhabungsgriff 27 einschließlich der Klemmarretierungsvorrichtung 29 sind hierzu an einem längs der Führungssäule 25 kugelgelagert verschiebbaren Schlitten 41 angebracht, der die Induktionsspuleneinheit 15 mittels einer quer zur Führungsschiene 25 verlaufenden Schwalbenschwanz-Führungsschiene 43 verschiebbar fixiert. Ein in dem Schlitten gegen eine Feder 45 verschiebbar geführter Arretierungsstift 47 fixiert durch lösbares Eingreifen in eine Rastaussparung 49 der Induktionsspuleneinheit 15 diese an dem Schlitten 41.

Für den Erwärmungsvorgang wird der Werkzeughalter 3 in den Aufnahmekörper 23 des Drehtellers 24 eingesetzt, und die Induktionsspuleneinheit 15 aus der in Fig. 1 dargestellten angehobenen Stellung abgesenkt, bis die Induktionsspule 21 den Aufnahmebereich 9 umschließt. Durch Drücken eines an der Induktionsspuleneinheit 15 in einer für Einhandbedienung geeigneten Nähe zum Handhabungsgriff 27 angeordneten Tastschalters 46 wird die Induktionsstromspeisung der Induktionsspule 21 eingeschaltet, was durch eine gleichfalls an der Induktionsspuleneinheit 15 angeordnete Anzeigelampe 48 für die Einschaltdauer des Stroms angezeigt wird. Der Induktionsstrom fließt während der frei wählbaren Betätigungsdauer des Schalters 46 . Der Induktionsstromgenerator 18 schaltet den Strom lediglich nach einer vorgegebenen Sicherheitszeitspanne ab, um unbeabsichtigte Frhitzungsschäden an dem Werkzeug bzw. Werkzeughalter zu verhindern. Der Bediener des Schrumpfgeräts 1 betätigt den Taster 46 nur so lange, bis das Werkzeug 5 entweder von selbst oder mit geringer manueller Nachhilfe in die vertikal ausgerichtete Aufnahmeöffnung 11 des Werkzeughalters 3 einsinkt. Unmittelbar danach kann der lnduktionsstrom abgeschaltet werden und unnötige Erwärmung des Werkzeughalters 3 vermieden werden.

Um den Werkzeughalter 3 für die nachfolgende Kühlphase nicht aus dem Aufnahmekörper 23 entnehmen zu müssen, ist der Aufnahmekörper 23 seinerseits auf dem Drehteller .24 angeordnet und wird zusammen mit diesem und dem in dem Aufnahmekörper 23 sitzenden Werkzeughalter 3 in eine Position bewegt, in welcher eine über flexible Schläuche 50 mit Kühlflüssigkeit aus einem Kühlaggregat 51 gespeiste Kühlmanschette 53 auf den Aufnahmebereich 9 des Werkzeughalters 3 flächig anliegend aufgesetzt wird. Der flächige Anlagekontakt des Innenmantels der Kühlmanschette 53 am Außenmantel des Aufnahmebereichs 9 des Werkzeughalters 3 und die Kühlung der Kühlmanschette 53 durch die in einem geschlossenen Kreislauf durch die Kühlmanschette 53 und das Kühlaggregat 51 zirkulierenden Kühlflüssigkeit sorgen für sehr rasches Abkühlen des Werkzeughalters 3 auf Umgebungstemperatur. Um Brandverletzungen an den auf mehrere 100°C erwärmten Werkzeughaltern auszuschließen, ist der Drehteller 24 mit drehrichtungsabhängig wirksamen Rasten versehen, die eine Drehung nur in der durch einen Pfeil 54 angedeuteten Drehrichtung zulassen, in welcher die Werkzeughalter 3 von der Bedienerseite des Schrumpfgeräts 1 weg von der Erwärmungsposition unterhalb der Induktionsspuleneinheit 15 in die zum Aufsetzen der Kühlmanschette 53 bestimmte Position bewegt wird.

Der Drehteller 24 trägt, wie Fig. 1 zeigt, auf seinem Umfang verteilt mehr als zwei, hier drei Aufnahmekörper 23, und auch das Kühlaggregat 51 speist mehrere Kühlmanschetten 53 gleichzeitig. Auf diese Weise können mehrere Werkzeughalter gleichzeitig gekühlt werden, ohne dass die induktive Erwärmung der Werkzeughalter hierdurch behindert würde. Die Kühtmanschetten 53 haben Ösen 55, mit welchen sie abnehmbar an einer Haltewand 57 des Schrumpfgeräts 1 aufgehängt sind. In der Haltewand sind darüber hinaus auch Schlitze 59 vorgesehen, in welchen die Kühlflüssigkeitsschläuche 50 der Kühlmanschetten 53 längsverschiebbar und geordnet geführt werden.

Die Kühlmanschetten 53 können unterschiedlichen Innendurchmesser und unterschiedliche Innenform haben, abhängig von den zu kühlenden Werkzeughaltern 3; sie können aber auch gleiche Abmessungen haben, falls nur ein und derselbe Typ von Werkzeughalter geschrumpft werden soll. Auch die Aufnahmekörper 23 können an dem Drehteller 24 abnehmbar gehalten sein. Im dargestellten Ausführungsbeispiel sind die drei Aufnahmekörper 23 an einer gemeinsamen Nabe 61 mit Spiel befestigt, so dass die Gruppe dieser Aufnahmekörper 23 als Baueinheit getauscht werden kann. Das Spiel der Nabenbefestigung verhindert Verklemmen der Aufnahmekörper 23 in den zur Aufnahme der Aufnahmekörper 23 an den Drehtisch 24 vorgesehenen Zentrierringen 63.

Bei dem Kühlaggregat 51 handelt es sich bevorzugt um ein nach dem Wärmepumpenprinnp arbeitendes Aggregat, wenngleich auch andere Kühlaggregate geeignet sind. Die einzelnen Kühlmanschetten 53 können zueinander parallel an das Kühlaggregat angeschlossen und gegebenenfalls einzeln zu- und abschaltbar sein. In der dargestellten Ausführungsform sind die Kühlaggregate in Reihe in einen gemeinsamen Kühlkreislauf geschaltet und werden unabhängig davon, ob sie in Benutzung sind oder nicht, von der Kühlflüssigkeit gekühlt.

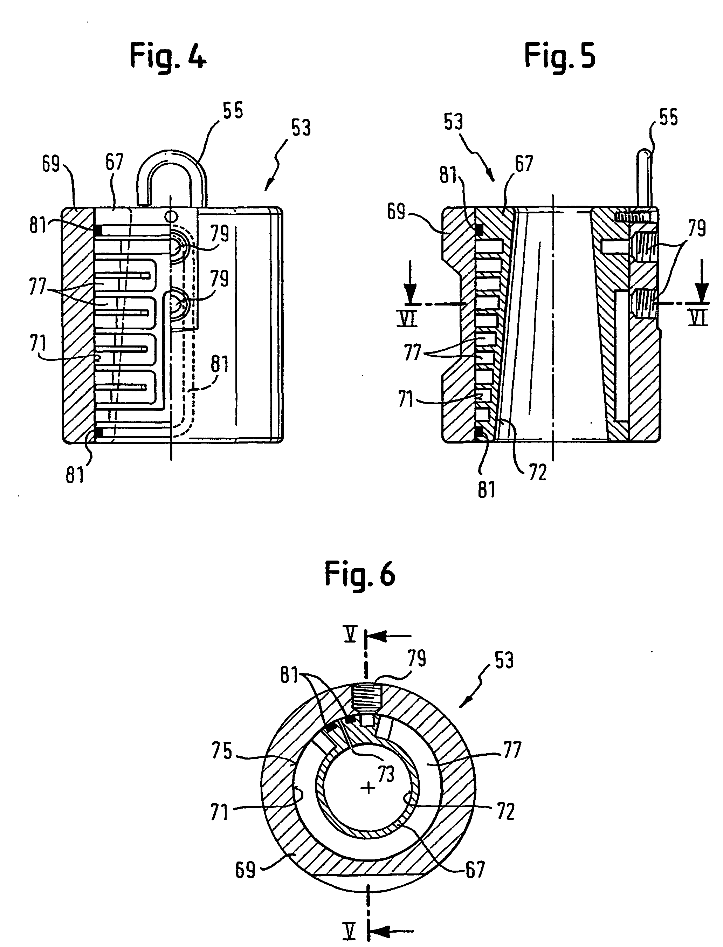

Die Fig. 4 bis 6 zeigen Einzelheiten der Kühlmanschette 53. Die Kühlmanschette 53 umfasst zwei koaxial ineinander angeordnete Hülsenelemente 67, 69, von denen das äußere Hülsenelement 69 als vergleichsweise dickwandiger und damit mechanisch stabiler, ringförmig geschlossener Zylinderrohrabschnitt ausgebildet ist und eine kreiszylindrische Innenmantelfläche 71 hat. Das innere Hülsenelement 67 hat in seiner Rohrwand einen sowohl axial als auch radial durchgehenden Schlitz 73 und liegt mit seiner kreiszylindrischen äußeren Umfangsfläche 75 an der Innenmantelfläche 71 des äußeren Hülsenelements 69 an. Die Innenmantelfläche 72 des inneren Hülsenelements 67 ist in ihrer Öffnungsweite und in ihrem Konuswinkel den entsprechenden Abmessungen des zu kühlenden Spann- bzw. Aufnahmebereichs 9 des Werkzeughalters 3 engpassend angepasst, so dass das innere Hülsenelement 67 bei auf den Werkzeughalter 3 aufgesetzter Kühlmanschette 53 in einem möglichst großflächigen unmittelbaren Anlagekontakt zum Werkzeughalter 3 steht. Um ein Verklemmen des inneren Hülsenelements 67 auf dem Werkzeughalter 3 zu verhindern und eine Formanpassung der aneinander anliegenden Flächen des inneren Hülsenelements 67 und des Werkzeughalters zu ermöglichen, enthält die Wand des inneren Hülsenelements 67 einen sowohl radial als auch axial durchgehenden, axial sich erstreckenden Schlitz 73.

Der Außenmantel 75 des inneren Hülsenelements 67 enthält nicht überlappend mit dem Schlitz 73 eine meanderförmige Nut 77, die an durch das äußere Hülsenelement 69 hindurchreichenden Anschlussöffnungen 79 für die Kühlschläuche 50 (Fig. 1) endet. Die Nut 77 bildet zusammen mit dem Innenmantel 71 des äußeren Hülsenelements 69 einen Kühlflüssigkeitskanal innerhalb der Kühlmanschette 53. Der von der Nut 77 überdeckte Bereich der Außenmantelfläche 75 des inneren Hülsenelements 67 wird von einem ringförmig geschlossenen Dichtring 81 überdeckt, der sich in Umfangsrichtung längs der axialen Enden des inneren Hülsenelements 67 einerseits und beiderseits des Schlitzes 73 axial erstreckt. Der Dichtring 81 dichtet den Bereich der Nut 77 nach außen hin ab, und zwar so, dass sich das innere Hülsenelement 67 noch in gewissem Maße radial für den Ausgleich von Abmessungstoleranzen der konischen Innenmantelfläche 72 bezogen auf den Werkzeughalter 3 verformen kann. Um für hinreichende Elastizität des inneren Hülsenelements 67 zu sorgen, ist der Abstand zwischen dem Boden der Nut 77 und der Innenmantelfläche 72 über die Länge der Nut 77 etwa konstant und vergleichsweise gering. Die radialen und axialen Abmessungen des Nutquerschnitts sind hierbei größer als die Materialbereiche zwischen benachbarten Abschnitten der Nut 77 einerseits und der radialen Dicke des Hülsenquerschnitts im Bereich der Nutböden.

Im Folgenden werden Varianten von Kühlmanschetten erläutert, die an Stelle der Kühlmanschette der Fig. 4 bis 6 bei dem Schrumpfgerät der Figur 1 eingesetzt werden können. Gleichwirkende Komponenten sind mit den Bezugszahlen der Fig. 4 bis 6 und zur Unterscheidung mit einem Buchstaben versehen. Zur Erläuterung von Aufbau und Wirkungsweise wird auf die jeweils vorangegangene Beschreibung, insbesondere der Fig. 4 bis 6, Bezug genommen.

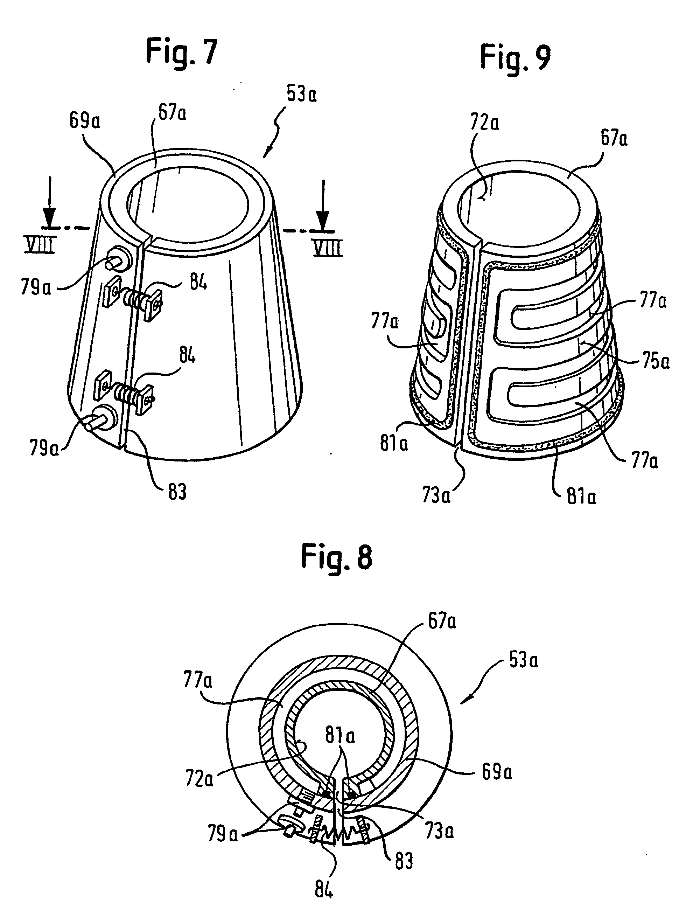

Während das äußere Hülsenelement 69 des Ausführungsbeispiels der Fig. 4 bis 6 Kreiszylinderform hat und ungeschlitzt ist, ist das äußere Hülsenelement 69a der in den Fig. 7 bis 9 dargestellten Kühlmanschette 53a als Konushülse ausgebildet, und dementsprechend hat das innere Hülsenelement 67a einen konischen Außenmantel 75a. Das innere Hülsenelement 67a hat wiederum einen axial und radial durchgehenden, axial sich erstreckenden Schlitz 73a. Fluchtend mit diesem Schlitz 73a ist auch das äußere Hülsenelement 69a mit einem axial und radial durchgehenden Schlitz 83 versehen, der zusammen mit dem Schlitz 73a einen Dehnungsausgleich der Kühlmanschette 53a ermöglicht. Über den Schlitz 83 hinweg greifen an dem äußeren Hülsenelement 69a Vorspannfedern 84 an, die die Schlitzränder aufeinander zu vorspannen. Die Vorspannfedern 84 können mit ihren Enden an dem äußeren Hülsenelement 69a angebaut sein; die Federn können aber auch als ringförmig geschlossene, das Hülsenelement 69a umschließende Ringfedern ausgebildet sein.

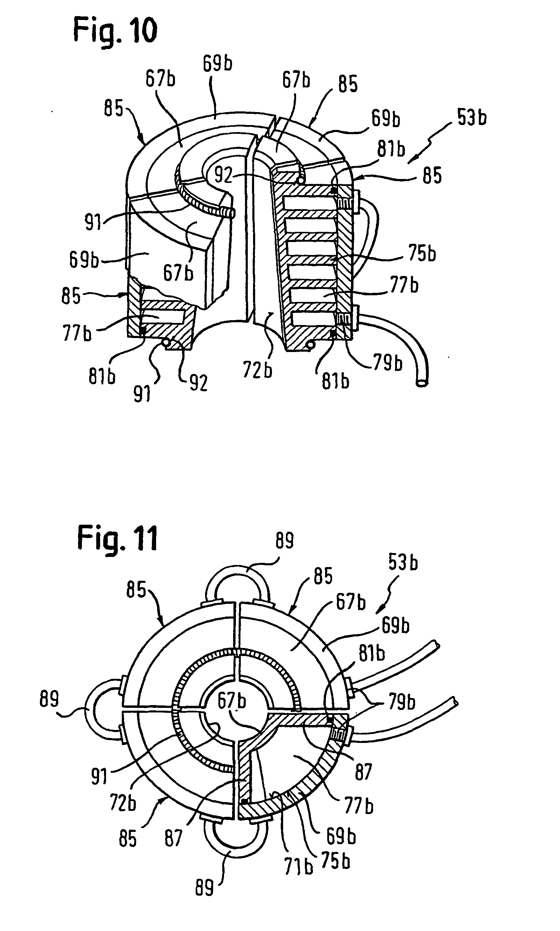

Die vorangegangen erläuterten Kühlmanschetten sind mit Hilfe von Hülsenelementen aufgebaut, die sich gegebenenfalls bis auf einen Dehnungsschlitz über den gesamten Umfang einteilig erstrecken. Die Fig. 10 und 1 1 zeigen eine Variante einer Kühlmanschette 53b, die aus mehreren, hier vier, jeweils abgeschlossenen und jeweils für sich einen Kühlkanalabschnitt bildenden Manschettensegmenten 85 aufgebaut ist. Jedes der Manschettensegmente 85 besteht aus einem in Umfangsrichtung durch Endwände 87 begrenzten inneren Hülsensegment 67b und einem äußeren Hülsensegment 69b, dessen Innenmantel 71 b dem Außenmantel 75b des inneren Hülsensegments 67b angepasst ist. Im Außenmantel 75b des inneren Hülsensegments 67b ist wiederum zur Bildung eines durch das äußere Hülsensegment 69b abgeschlossenen Kühlflüssigkeitskanals eine meanderförmige. Nut 77b eingeformt, deren Enden mit durch das äußere Hülsensegment 69b hindurch reichenden Anschlussöffnungen 79b für die Kühlflüssigkeitsschläuche 50 oder aber für einen gleichfalls flexiblen Verbindungsschlauch 89 versehen sind, der den Kühlflüssigkeitsabschnitt des einen Manschettensegments 85 mit dem Kühlflüssigkeitskanalabschnitt des in Umfangsrichtung benachbarten Manschettensegments 85 verbindet. Jedes der Manschettensegmente 85 ist hierbei für sich durch einen Dichtring 81 b abgedichtet, wie dies vorangegangen für den Dichtring 81 erläutert wurde.

Bei dem dargestellten Ausführungsbeispiel sind die äußeren Hülsensegmente 69b als Abschnitte eines Kreiszylinderrohrs ausgebildet und das innere Hülsensegment 67b hat dementsprechend eine kreiszylinderabschnittförmige Außenkontur, während der Innenmantel 72b der Außenkontur des Werkzeughalters angepasst ist und beispielsweise Konusform hat. Es versteht sich, dass auch das äußere Hülsensegment 69b konusförmig gestaltet sein kann, wie dies in Fig. 7 dargestellt ist.

Die Manschettensegmente 85 sind auf axial beiden Seiten der Kühlmanschette 53b durch je eine Ringfeder 91, die stirnseitige Ansätze der inneren Hülsensegmente 67b umschließt, radial elastisch zusammengehalten. Die Ringfeder 91 kann gegebenenfalls auch an den äußeren Hülsensegmenten 69b gehalten sein. Die Ringfedern 91 sitzen hierbei über wenigstens ihren halben Spiraldurchmesser mit geringem Spiel in zueinander in Umfangsrichtung fluchtenden Nuten 92 der Ansätze und sorgen zugleich für die axiale Ausrichtung und Fixierung der Manschettensegmente 85 zueinander.

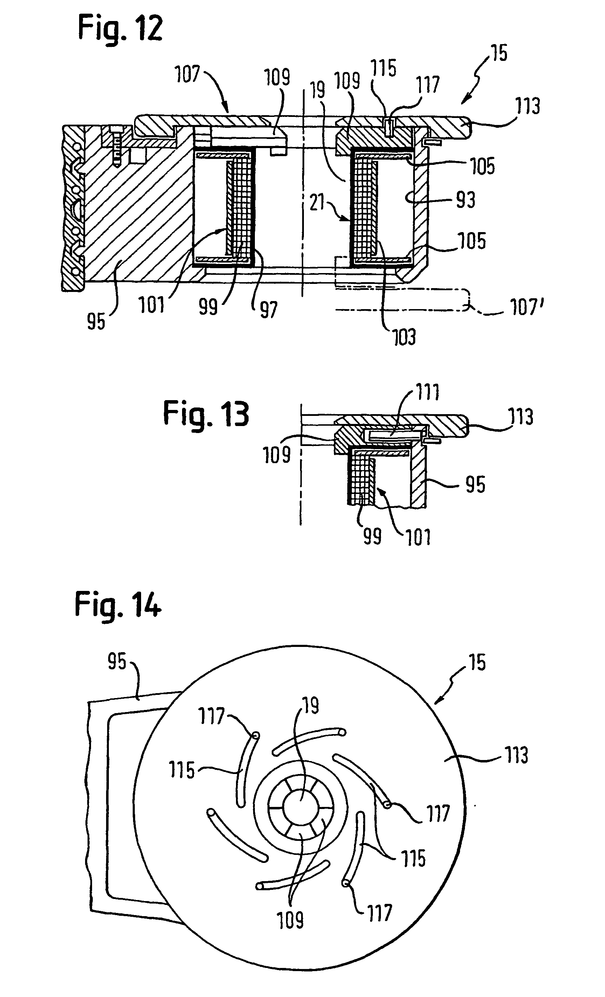

Die Fig. 12 bis 15 zeigen Einzelheiten der Induktionsspuleneinheit 15. Die Induktionsspuleneinheit 15 trägt in einer kreiszylindrischen Aufnahmeöffnung 93 eines aus nichtmagnetischem Material bestehenden Grundkörpers 95 die auf einem Spulenkörper 97 gewickelte Drahtwicklung 99 der Induktionsspule 21. Zur Bündelung des Magnetfelds auf den in den Innenraum der Wicklung 99 einzubringenden, induktiv zu erwärmenden Werkzeughalter ist auf der Außenseite der Wicklung 99 eine Jochanordnung 101 aus ferromagnetischem Material, beispielsweise Ferrit, angeordnet. Die Jochanordnung 101 hat ein hülsenförmig den Außenumfang der Wicklung 99 umschließendes, gegebenenfalls aus mehreren im Abstand voneinander angeordneten Platten gebildetes axiales Jochelement 103, an das sich radial über die axialen Enden der Wicklung 99 greifende Jochelemente 105 anschließen. Die Jochelemente 105 können als Ringscheiben oder aber gleichfalls als im Abstand voneinander angeordnete Segmentplatten ausgebildet sein.

Der Innendurchmesser der Öffnung 19 ist für den maximalen Durchmesser der zu erwärmenden Werkzeughalter ausgelegt. Um auch bei vergleichsweise großem radialen Abstand der Wicklung 99 vom Werkzeughalter hinreichend große Induktionsströme zu erhalten, sitzt an wenigstens einem axialen Ende der Wicklung 99 eine über den Innenumfang der Wicklung 99 in die Öffnung 19 radial hineinragende Polschuhanordnung 107 mit variablem, dem Außendurchmesser des Werkzeughalters betriebsmäßig wählbar anpassbaren Innendurchmesser. Die Polschuhanordnung 107 hat eine Vielzahl in Umfangsrichtung der Wicklung 99 verteilte, und sich vorzugsweise auch in Umfangsrichtung überlappende Jochelemente 109 aus ferromagnetischem Material, beispielsweise Ferritmaterial, die jeweils für sich an fest im Grundkörper 95 fixierten, radialen Zapfen 111 (Fig. 13) radial verschiebbar geführt sind. An dem Grundkörper 95 ist ferner eine Steuerscheibe 113 gleichachsig zur Induktionsspule 21 drehbar geführt, die für jedes der Jochelemente 109 einen schräg zur Umfangsrichtung verlaufenden Steuerschlitz 115 hat, in den ein vom Jochelement 109 abstehender Nockenfolgerstift 117 eingreift. Durch Drehen der Steuerscheibe 113 können die Jochelemente 109 gemeinsam radial in die Öffnung 19 hinein verschoben oder aus ihr herausgezogen werden. Der lichte Durchmesser der Polschuhanordnung 107 ist auf diese Weise durch Drehen der Steuerscheibe 113 betriebsmäßig änderbar.

In manchen Ausführungsformen genügt es, wenn an der Oberseite der Induktionsspule 21 eine Polschuhanordnung 107 der erläuterten Art angeordnet ist, da diese Polschuhanordnung dann in Überlappung mit der Stirnseite des Werkzeughalters gebracht werden kann. Bei 107' ist eine weitere Polschuhanordnung an der Unterseite der Induktionsspule 21 angedeutet, die gegebenenfalls zusätzlich oder auch alternativ zur Polschuhanordnung 107 vorgesehen sein kann. Soweit an den axialen Enden der Wicklung 99 Polschuhanordnungen 107 oder 107' vorgesehen sind, können dort die radialen Jochelemente 105 auch entfallen.

Im Folgenden werden Varianten von Polschuhanordnungen erläutert, wie sie bei der Induktionsspuleneinheit 15 der Fig. 12 bis 15 verwendbar sind. Gleichwirkende Komponenten sind mit den vorangegangen benutzten Bezugszahlen bezeichnet und zur Unterscheidung mit einem Buchstaben versehen. Zur Erläuterung von Aufbau und Wirkungsweise wird auf die vorangegangene Beschreibung Bezug genommen.

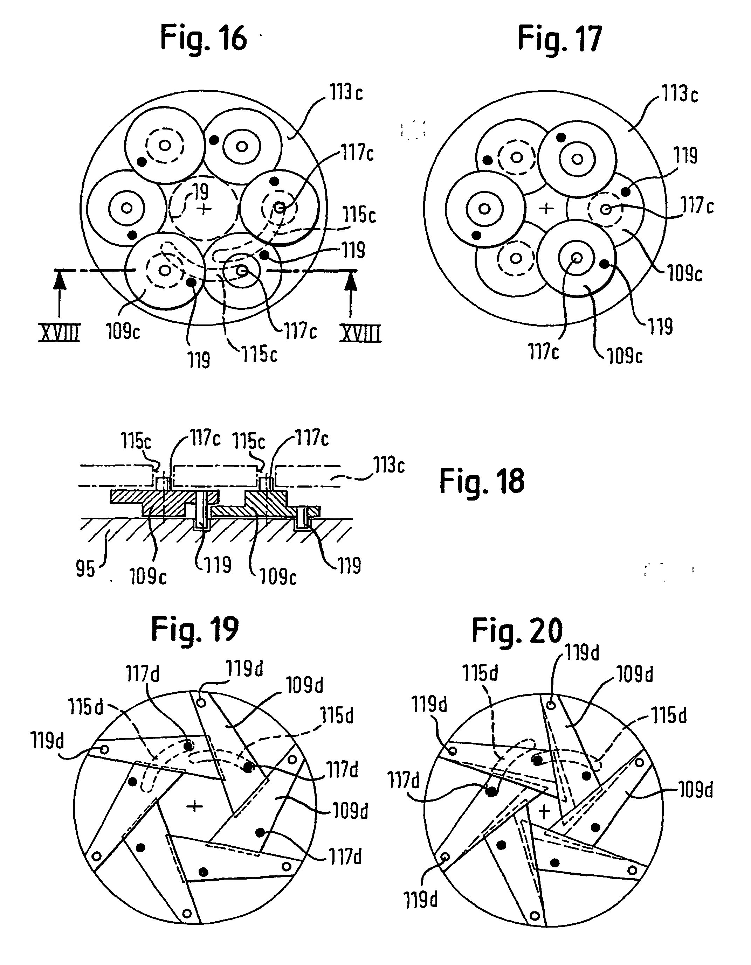

Bei der Polschuhanordnung der Fig. 12 bis 15 sind die Jochelemente radial verschiebbar an dem Grundkörper der Induktionsspuleneinheit geführt. Die Fig. 16 bis 18 zeigen eine Variante, bei welcher mehrere kreisscheibenförmige Jochelemente 109c an parallel zur Spulenachse verlaufenden Zapfen 119 exzentrisch zu ihrer Scheibenmitte schwenkbar an dem Grundkörper 95 gelagert sind. Die Jocheiemente 109c bilden auch hier eine variable Polschuhanordnung 107c, die mittels einer zur Spulenachse zentrisch drehbaren Steuerscheibe 113c gemeinsam in die Öffnung 19 der Induktionsspuleneinheit hineingeschwenkt oder aus dieser herausgeschwenkt werden können. Die Steuerelemente 109c haben hierzu wiederum zentrische Nockenfolgerzapfen 1 17c, die in schräg zur Umfangsrichtung der Steuerscheibe 113c verlaufenden Schlitzen 115c geführt sind. Fig. 16 zeigt hierbei die Jochelemente 109c in ihrer spulenachsenfernen Stellung, während Fig. 17 die spulenachsennahe Stellung zeigt.

In der Ausführungsform der Fig. 16 bis 18 haben die Jochelemente Kreisscheibenform. Die Fig. 19 und 20 zeigen eine Variante, bei welcher die Jochelemente langgestreckte Form haben und an ihrem der Induktionsspulenachse fernen Ende mittels Gelenkzapfen 119d in der Stirnebene der Induktionsspule 21 schwenkbar gelagert sind. Auch die Jochelemente 109d tragen Nockenfolgerzapfen 117d, die in schräg zur Umfangsrichtung verlaufende Schlitze 1 15d einer gemeinsamen Steuerscheibe eingreifen. Fig. 19 zeigt die Jochelemente 109d in ihrer der Spulenachse fernen Position; Fig. 20 zeigt die spulenächsennahe Stellung der Jochelemente.

In der Schrumpfvorrichtung gemäß Fig. 1 werden die in den Werkzeughalter 3 einzusetzenden Werkzeuge 5 mit vertikalem Schaft von oben her in die Aufnahmeöffnung 11 eingesetzt, sobald die Aufnahmeöffnung 11 hinreichend wärmegedehnt ist.

## Patentansprüche

1. Schrumpfvorrichtung für wenigstens einen ein Rotationswerkzeug in einer zentrischen Aufnahmeöffnung (11) im Presssitz haltenden Werkzeughalter (3), mit einer insbesondere als Induktionsheizvorrichtung ausgebildeten Heizvorrichtung (15, 18) zur Wärmedehnung des Werkzeughalters (3).im Bereich der Aufnahmeöffnung (11), **dadurch gekennzeichnet, dass** zum Kühlen des Bereichs der Aufnahmeöffnung (11) des Werkzeughalters (3) eine Kühlvorrichtung (51, 53) mit wenigstens einer von Kühlflüssigkeit durchströmbare, in Berührungskontaktauf dem Werkzeughalter (3) aufsetzbare Kühlmanschette (53) vorgesehen ist.

2. Schrumpfvorrichtung nach Anspruch 1, **dadurch gekennzeichnet, dass** die Kühlvorrichtung (51, 53) ein die Kühlflüssigkeit in einem geschlossenen Kühlkreislauf durch die Kühlmanschette (53) bzw. Kühlmanschetten (53) führendes Kühlaggregat (51) umfasst.

3. Schrumpfvorrichtung nach Anspruch 2, **dadurch gekennzeichnet, dass** die Kühlmanschetten (53) in Reihe hintereinander in dem Kühlkreislauf angeordnet sind.

4. Schrumpfvorrichtung nach einem der Ansprüche 1 bis 3, **dadurch gekennzeichnet, dass** die Kühlmanschette (53) bzw. Kühlmanschetten (53) an flexiblen Kühlflüssigkeitsschläuchen (49) angeschlossen und freibeweglich angeordnet sind.

5. Schrumpfvorrichtung nach einem der Ansprüche 1 bis 4, **dadurch gekennzeichnet, dass** sie einen um eine insbesondere vertikale Drehachse drehbaren Drehteller (24) mit mehreren Aufnahmen (23) für Werkzeughalter (3) aufweist, die in jeweils einer der Aufnahmen (23) gehalten nacheinander durch den Einwirkbereich der Heizvorrichtung (15, 18) und der Kühlvorrichtung (51, 53) bewegbar sind, wobei Kühlmanschette (53) bzw. die Kühlmanschetten (53) an flexible Kühlflüssigkeitsschläuche (49) angeschlossen sind, so dass sie der Drehbewegung des Drehtellers (24) folgen können.

6. Schrumpfvorrichtung nach Anspruch 5, **dadurch gekennzeichnet, dass** der Drehteller (24) eine Drehrichtungssperre aufweist, die die Drehbewegung in einer vorbestimmten Drehrichtung insbesondere vom Bereich der Heizvorrichtung (15, 18) zur Bedienerseite der Schrumpfvorrichtung hin blockiert.

7. Schrumpfvorrichtung nach Anspruch 5 oder 6, **dadurch gekennzeichnet, dass** die Aufnahmen (23) in einer auswechselbar an dem Drehteller (24) gehaltenen Einheit angeordnet sind.

8. Schrumpfvorrichtung nach Anspruch 7, **dadurch gekennzeichnet, dass** die Einheit eine zur Drehachse des Drehtellers (24) im Wesentlichen zentrische Nabe (61) und mehrere die Aufnahmen (23) bildende Aufnahmekörper umfasst, die mit Spiel an der Nabe (61) gehalten sind und in Führungen (63) des Drehtellers (24) geführt sind.

9. Schrumpfvorrichtung nach einem der Ansprüche 1 bis 8 **dadurch gekennzeichnet, dass** die Heizvorrichtung (15, 18) eine an einer vertikalen Führungssäule (25) mit vertikaler Spulenachse verschiebbar geführte Induktionsspuleneinheit (15) aufweist, die insbesondere über ein flexibles Kabel (17) mit einem zur Säule feststehenden Induktionsstromgenerator (18) verbunden ist,
und dass an der Induktionsspuleneinheit (15) ein manuell zu betätigender Tastschalter (46) angeordnet ist, mittels dem die Induktionsstromspeisung der Induktionsspuleneinheit (15) wenigstens für eine begrenzte Zeitspanne frei wählbar ein- und ausschaltbar ist.

10. Schrumpfvorrichtung nach Anspruch 9, **dadurch gekennzeichnet, dass** die Induktionsspuleneinheit (15) mittels einer gegen Federvorspannung lösbaren Arretierungsklemmvorrichtung (29) an der Führungssäule (25) in einerwählbaren Vertikalposition arretierbar ist.

11. Schrumpfvorrichtung nach Anspruch 10, **dadurch gekennzeichnet, dass** die Arretierungskiemmvorrichtung (29) einen in Einhandbedienungsnähe zum Tastschalter (46) angeordneten Handhabungsgriff (27) zum Lösen der Arretierung aufweist.

12. Schrumpfvorrichtung nach einem der Ansprüche 1 bis 11, **dadurch gekennzeichnet, dass** die Kühlmanschette (53; 53a) ein zur Berührungsanlage an dem Werkzeughalter (3) bestimmtes Hülsenelement (67; 67a) aufweist, welches einen radial die Wand des Hülsenelements (67; 67a) durchdringenden, über die gesamte Hülsenlänge im Wesentlichen axial sich erstreckenden Schlitz (73; 73a) aufweist und fest mit Wänden eines Kühlflüssigkeitskanals verbunden ist oder Wände oder Wandabschnitte eines Kühlflüssigkeitskanals (77; 77a) integral bildet.

13. Schrumpfvorridhtung nach Anspruch 12, **dadurch gekennzeichnet, dass** das zur Berührungsanlage an dem Werkzeughalter (3) bestimmte innere Hülsenelement (67; 67a) radial außen von einem äußeren Hülsenelement (69; 69a) abgedichtet überdeckt ist und in dem inneren (67; 67a) oder/und dem äußeren (69; 69a) Hülsenelement wenigstens eine Nut (77; 77a) zur Bildung des Kühlflüssigkeitskanals integral eingeformt ist.

14. Schrumpfvorrichtung nach Anspruch 13, **dadurch gekennzeichnet, dass** die Nut (77; 77a) meanderförmig in das innere (67; 67a) oder/und das äußere (69; 69a) Hülsenelement eingeformt ist.

15. Schrumpfvorrichtung nach Anspruch 14, **dadurch gekennzeichnet, dass** die Dicke von Materialbereichen zwischen benachbarten, nebeneinander verlaufenden Abschnitten der Nut (77; 77a) oder/und die Dicke des Hülsenelements (67; 67a) im Bereich des Bodens der Nut (77; 77a) kleiner ist als die Querabmessung der Nut (77; 77a) radial oder/und axial zur Kühlmanschette (53; 53a).

16. Schrumpfvorrichtung nach einem der Ansprüche 13 bis 15, **dadurch gekennzeichnet, dass** die Nut (77; 77a) am Außenmantel des inneren Hülsenelements (67; 67a) vorgesehen ist und das äußere Hülsenelement (69; 69a) einen zur Außenmantelkonfur des inneren Hülsenelements (67; 67a) komplementären lnnenmantel (71; 71a) hat.

17. Schrumptvorrichtung nach einem der Ansprüche 13 bis 16, **dadurch gekennzeichnet, dass** das äußere Hülsenalement (69) als ringförmig geschlossene, im wesentlichen zylindrische Hülse ausgebildet ist.

18. Schrumpfvorrichtung nach einem der Ansprüche 13 bis 16, **dadurch gekennzeichnet, dass** das innere (67a) und das äußere (69a) Hülsenelement fluchtende, radial durchgehende, im Wesentlichen axial sich erstreckende Schlitze (73a, 83) aufweisen.

19. Schrumpfvorrichtung nach Anspruch 18, **dadurch gekennzeichnet, dass** das innere (67a) und das äußere (69a) Hülsenelement als Konushülse ausgebildet sind.

20. Schrumpfvorrichtung nach Anspruch 18 oder 19, **dadurch gekennzeichnet, dass** der Schlitz bzw. die Schlitze der Kühlmanschette (53a) durch Federmittel (84) in Umfangsrichtung in Richtung seiner Verengung vorgespannt ist.

21. Schrumpfvorrichtung nach einem der Ansprüche 1 bis 11, **dadurch gekennzeichnet, dass** die Kühlmanschette (53b) mehrere in Umfangsrichtung benachbarte Hülsensegmente (67b) aufweist, von denen jedes fest mit Wänden eines Kühlflüssigkeitskanalabschnitts (77b) verbunden ist oder Wände oder Wandabschnitte des Kühmüssigkeitskanalabschnitts bildet,
dass die Hülsensegmente (67b) in Umfangsrichtung elastisch miteinander verbunden sind und
dass die Kühlflüssigkeitsabschnitte (77b) ihrerseits zur Bildung des Kühlflüssigkeitskanals miteinander verbunden, insbesondere in Reihe miteinander verbunden sind.

22. Schrumpfvorrichtung nach Anspruch 21, **dadurch gekennzeichnet, dass** jedes zur Berührungsanlage an dem Werkzeughalter bestimmte innere Hülsensegment (67b) radial außen von einem äußeren Hülsensegment (69b) abgedichtet überdeckt ist und in dem inneren (67b) oder/und äußeren (69b) Hülsensegment wenigstens eine Nut (77b) zur Bildung des Kühlflüssigkeitskanalabschnitts integral eingeformt ist.

23. Schrumpfvorrichtung nach Anspruch 22, **dadurch gekennzeichnet, dass** die Nut (77b) meanderförmig in das innere (67b) oder/und das äußere (69b) Hülsensegment eingeformt ist.

24. Schrumpfvorrichtung nach Anspruch 23, **dadurch gekennzeichnet, dass** die Dicke zwischen benachbart nebeneinander verlaufenden Abschnitten der Nut (77b) oder/und die Dicke des Hülsensegments (67b) im Bereich des Bodens der Nut (77b) kleiner ist als die Querabmessung der Nut (77b) axial oder/und radial zur Kühlmanschette.

25. Schrumpfvorrichtung nach einem der Ansprüche 22 bis 24, **dadurch gekennzeichnet, dass** die Nut (77b) am Außenmantel des inneren Hülsensegments (67b) vorgesehen ist und das äußere Hülsensegment (69b) einen zur Außenmantelkontur des inneren Hülsenelements (67b) eng passend komplementären Innenmantel hat.

26. Schrumpfvorrichtung nach einem der Ansprüche 22 bis 25, **dadurch gekennzeichnet, dass** die äußeren Hülsensegmente (69b) im Wesentlichen als Ringzylindersegmente ausgebildet sind.

27. Schrumpfvorrichtung nach einem der Ansprüche 22 bis 26, **dadurch gekennzeichnet, dass** die Hülsensegmente (67b, 69b) durch wenigstens eine umlaufende Ringfeder (91) miteinander verbunden sind.

28. Schrumpfvorrichtung nach Anspruch 27, **dadurch gekennzeichnet, dass** die Ringfeder (91) in zueinander in Umfangsrichtung fluchtenden Nuten der Hülsenelemente (67b) angeordnet ist und die Hülsenelemente relativ zueinander axial fixiert.

29. Schrumpfvorrichtung nach einem der Ansprüche 1 bis 28, **dadurch gekennzeichnet, dass** die Induktionsheizvorrichtung (15, 18) eine Induktionsspuleneinheit (15) mit einer für die Wärmedehnung im Wesentlichen konzentrisch auf den Bereich der Aufnahmeöffnung (11) des Werkzeughalters (3) aufsetzbaren Induktionsspule (21) sowie eine entlang des Außenumfangs der Induktionsspule (21) axial und entlang zumindest eines der beiden axialen Endflächen der Induktionsspule (21) radial sich erstreckenden Jochanordnung (101) aus ferromagnetischem Material aufweist, wobei der zum Werkzeugeinsteckende benachbarte oder/und der zum Werkzeugeinsteckende entfernt gelegene Bereich der Jochanordnung (101) mehrere radial über den Innenumfang der Induktionsspule (21) nach innen vorstehende, relativ zueinander beweglich geführte Jochelemente (109) aus ferromagnetischem Material aufweist, deren radialer Überstand über den Innenumfang der Induktionsspule (21) betriebsmäßig änderbar ist.

30. Schrumpfvorrichtung nach Anspruch 29, **dadurch gekennzeichnet, dass** die Jochelemente (109) relativ zueinander verschiebbar oder schwenkbar geführt sind.

31. Schrumpfvorrichtung nach Anspruch 30, **dadurch gekennzeichnet, dass** die Jochelemente (109) einander in Umfangsrichtung überlappen und radial zur induktionsspule (21) verschiebbar geführt sind.

32. Schrumpfvorrichtung nach Anspruch 30, **dadurch gekennzeichnet, dass** die Jochelemente (109c, d) in Umfangsrichtung einander überlappen und um achsparallel zur lnduktionsspule (21) verlaufende Schwenkachsen (119; 119a) schwenkbar sind.

33. Schrumpfvorrichtung nach einem der Ansprüche 29 bis 32, **dadurch gekennzeichnet, dass** die Jochelemente (109) mittels eines gemeinsamen, gleichachsig zur Induktionsspule (21) drehbaren Steuerelements (113), welcher über Steuerflächen-Nockenfolger-Anordnungen (115, 117) mit den Jochelementen (109) gekuppelt ist, verstellbar sind.

## Claims

1. A shrinking device for at least one toolholder (3) which retains a rotary tool with a press fit in a central accommodating opening (11), having a heating device (15, 18) which is designed, in particular, as an induction-heating device for thermally expanding the toolholder (3) in the region of the accommodating opening (11), **characterised in that** for cooling the region of the accommodating opening (11) of the toolholder (3) a cooling device (51, 53) is provided with at least one cooling collar (53) though which liquid coolant can flow and which can be positioned on the toolholder (3) in contact therewith.

2. Shrinking device according to claim 1, **characterised in that** the cooling device (51, 53) comprises a cooling unit (51) which guides the liquid coolant in a closed cooling circuit through the cooling collar (53) or cooling collars (53).

3. Shrinking device according to claim 2, **characterised in that** the cooling collars (53) are arranged in series one behind the other in the cooling circuit.

4. Shrinking device according to one of claims 1 to 3, **characterised in that** the cooling collar (53) or cooling collars (53) are connected to flexible liquid-coolant tubes (49) and arranged in a freely moveable manner.

5. Shrinking device according to one of claims 1 to 4, **characterised in that** it has a rotary plate (24) which can be rotated about an, in particular, vertical axis of rotation with a plurality of mounts (23) for toolholders (3), which, each retained in one of the mounts (23), can be moved one after the other through the region of action of the heating device (15, 18) and of the cooling device (51, 53), the cooling collar (53) or the cooling collars (53) being connected to flexible liquid-coolant tubes (49), with result that they can follow the rotary movement of the rotary plate (24).

6. Shrinking device according to claim 5, **characterised in that** the rotary plate (24) has a direction-of-rotation lock which blocks the rotary movement in a predetermined direction of rotation, in particular from the region of the heating device (15, 18) in the direction of the operator side of the shrinking device.

7. Shrinking device according to claim 5 or 6, **characterised in that** the mounts (23) are arranged in a unit which is retained in an exchangeable manner on the rotary plate (24).

8. Shrinking device according to claim 7, **characterised in that** the unit comprises a hub (61), which is essentially central in relation to the axis of rotation of the rotary plate (24), and a plurality of mounting bodies forming the mounts (23), which are retained with play on the hub (61) and are guided in guides (63) on the rotary plate (24).

9. Shrinking device according to one of claims 1 to 8 , **characterised in that** the heating device (15, 18) has an induction-coil unit (15) which is guided on a vertical guide column (25) such that it can be displaced with its coil axis vertical which is connected, in particular via a flexible cable (17), to an induction-current generator (18) which is fixed in relation to the column, and **in that** arranged on the induction-coil unit (15) is a contact switch (46) which can be actuated manually, by means of which the supply of induction current to the induction-coil unit (15) can be switched on and off in a freely selectable manner at least for a limited period of time.

10. Shrinking device according to claim 9, **characterised in that** the induction-coil unit (15) can be arrested in a selectable vertical position on the guide column (25) by means of an arresting clamping device (29) which can be released counter to spring prestressing.

11. Shrinking device according to claim 10, **characterised in that** the arresting clamping device (29) has a handle (27) which is arranged close enough to the contact switch (46) for single-handed operation and is intended for triggering the arresting action.

12. Shrinking device according to one of claims 1 to 11, **characterised in that** the cooling collar (53; 53a) has one sleeve element (67; 67a) which is intended for contact abutment against the toolholder (3), which has a slit (73, 73a), passing radially through the wall of the sleeve element (67; 67a) and extending essentially axially over the entire sleeve length, and is firmly connected to walls of a liquid-coolant channel or integrally forms walls or wall sections of a liquid-coolant channel (77; 77a).

13. Shrinking device according to claim 12, **characterised in that** the inner sleeve elements (67; 67a), which is intended for contact abutment against the toolholder (3), is covered over in a sealed manner in the radially outward direction by an outer sleeve element (69; 69a), and at least one groove (77; 77a) is integrally formed in the inner (67; 67a) and/or the outer (69; 69a) sleeve element for the purpose of forming the liquid-coolant channel.

14. Shrinking device according to claim 13, **characterised in that** the groove (77; 77a) is formed in meandering fashion in the inner (67; 67a) and/or the outer (69; 69a) sleeve element.

15. Shrinking device according to claim 14, **characterised in that** the thickness of material sections between adjacent sections of the groove (77; 77a) running one beside the other and/or the thickness of the sleeve element (67; 67a) in the region of the base of the groove (77; 77a) is smaller than the transverse dimension of the groove (77; 77a) radially and/or axially in relation to the cooling collar (53; 53a).

16. Shrinking device according to one of claims 13 to 15, **characterised in that** the groove (77; 77a) is provided on the outer casing of the inner sleeve element (67; 67a), and the outer sleeve element (69; 69a) has an inner casing (71; 71a) which complements the outer-casing contour of the inner sleeve element (67; 67a).

17. Shrinking device according to one of claims 13 to 16, **characterised in that** the outer sleeve element (69) is designed as an essentially cylindrical sleeve which is closed in the form of a ring.

18. Shrinking device according to one of claims 13 to 16, **characterised in that** the inner (67a) and the outer (69a) sleeve elements have aligned, radially continuous, essentially axially extending slits (73a, 83).

19. Shrinking device according to claim 18, **characterised in that** the inner (67a) and the outer (69a) sleeve elements are designed as conical sleeves.

20. Shrinking device according to claim 18 or 19, **characterised in that** the slit or the slits of the cooling collar (53a) are prestressed by spring means (84) circumferentially in the direction in which it narrows.

21. Shrinking device according to one of claims 1 to 11, **characterised in that** the cooling collar (53b) has a plurality of circumferentially adjacent sleeve segments (67b), of which each is firmly connected to walls of a liquid-coolant channel section (77b) or forms walls or wall sections of the liquid-coolant channel section, **in that** the sleeve segments (67b) are connected elastically to one another in circumferential direction, and **in that** the liquid-coolant sections (77b), for their part, are connected to one another, in particular connected to one another in series, for the purpose of forming the liquid-coolant channel.

22. Shrinking device according to claim 21, **characterised in that** each inner sleeve segment (67b), which is intended for contact abutment against the toolholder, is covered over in a sealed manner in the radially outward direction by an outer sleeve segment (69b), and at least one groove (77b) is integrally formed in the inner (67b) and/or outer (69b) sleeve segment for the purpose of forming the liquid-coolant channel section.

23. Shrinking device according to claim 22, **characterised in that** the groove (77b) is formed in meandering fashion in the inner (67b) and/or the outer (69b) sleeve segment.

24. Shrinking device according to claim 23, **characterised in that** the thickness in between sections of the groove (77b) running adjacent one beside the other and/or the thickness of the sleeve segment (67b) in the region of the base of the groove (77b) is smaller than the transverse dimension of the groove (77b) axially and/or radially in relation to the cooling collar.

25. Shrinking device according to one of claims 22 to 24, **characterised in that** the groove (77b) is provided on the outer casing of the inner sleeve segment (67b), and the outer sleeve segment (69b) has an inner casing which complements the outer-casing contour of the inner sleeve element (67b) in a closely fitting manner.

26. Shrinking device according to one of claims 22 to 25, **characterised in that** the outer sleeve segments (69b) are designed essentially as annular-cylinder segments.

27. Shrinking device according to one of claims 22 to 26, **characterised in that** the sleeve segments (67b, 69b) are connected to one another by at least one encircling annular spring (91).

28. Shrinking device according to claim 27, **characterised in that** the annular spring (91) is arranged in circumferentially aligned grooves of the sleeve elements (67b), and the sleeve elements are fixed axially relative to one another.

29. Shrinking device according to one of claims 1 to 28, **characterised in that** the induction-heating device (15, 18) has an induction-coil unit (15) with an induction coil (21), which can be positioned essentially concentrically on the region of the accommodating opening (11) of the toolholder (3) for thermal-expansion purposes, and also has a yoke arrangement (101) which is made of ferromagnetic material and extends axially along the outer circumference of the induction coil (21) and radially along at least one of the two axial end surfaces of the induction coil (21), whereby the region of the yoke arrangement (101) which is adjacent to the tool-insertion end and/or remote from the tool-insertion end has a plurality of yoke elements (109) which are made of ferromagnetic material, projecting radially inward beyond the inner circumference of the induction coil (21), the radial projection beyond the inner circumference of the induction coil (21) of which can be changed for operational purposes.

30. Shrinking device according to claim 29, **characterised in that** the yoke elements (109) are guided such that they can be displaced or pivoted relative to one another.

31. Shrinking device according to claim 30, **characterised in that** the yoke elements (109) overlap one another in circumferential direction and are guided such that they can be displaced radially in relation to the induction coil (21).

32. Shrinking device according to claim 30, **characterised in that** the yoke elements (109c, d) overlap one another in circumferential direction and can be pivoted about pivot axes (119, 119a) running in an axis-parallel manner in relation to the induction coil (21).

33. Shrinking device according to one of claims 29 to 32,**characterised in that** the yoke elements (109) can be adjusted by means of a common control element (113), which can be rotated equiaxially in relation to the induction coil (21) and is coupled to the yoke elements (109) via control-surface/cam-follower arrangements (115, 117).

## Revendications

1. Dispositif de contraction pour au moins un porte-outil (3) maintenant un outil de rotation dans une ouverture de logement (11) centrée en ajustement serré, comprenant un dispositif de chauffage (15, 18) conçu en particulier comme dispositif de chauffage par induction pour la dilatation thermique du porte-outil (3) dans la zone de l'ouverture de logement (11), **caractérisé en ce que**, pour le refroidissement de la zone de l'ouverture de logement (11) du porte-outil (3), il est prévu un dispositif de refroidissement (51, 53) comprenant au moins un manchon de refroidissement (53) pouvant être parcouru par du liquide de refroidissement et pouvant être posé en contact direct sur le porte-outil (3).

2. Dispositif de contraction selon la revendication 1, **caractérisé en ce que** le dispositif de refroidissement (51, 53) comprend un ensemble frigorifique (51) amenant le liquide de refroidissement dans un circuit de refroidissement fermé à travers le manchon de refroidissement (53) ou des manchons de refroidissement (53).

3. Dispositif de contraction selon la revendication 2, **caractérisé en ce que** les manchons de refroidissement (53) sont disposés en série les uns derrière les autres dans le circuit de refroidissement.

4. Dispositif de contraction selon l'une quelconque des revendications 1 à 3, **caractérisé en ce que** le manchon de refroidissement (53) ou les manchons de refroidissement sont raccordés à des tuyaux flexibles pour liquide de refroidissement (49) et sont disposés de façon librement mobile.

5. Dispositif de contraction selon l'une quelconque des revendications 1 à 4, **caractérisé en ce qu'**il présente un plateau tournant (24) pouvant tourner autour d'un axe de rotation en particulier vertical avec plusieurs logements (23) pour le porte-outil (3), qui sont maintenus chacun dans l'un des logements (23) et peuvent être déplacés les uns après les autres à travers la zone d'action du dispositif de chauffage (15, 18) et du dispositif de refroidissement (51, 53), le manchon de refroidissement (53) ou les manchons de refroidissement (53) étant raccordés à des tuyaux flexibles pour liquide de refroidissement (49), de sorte qu'ils peuvent suivre le mouvement de rotation du plateau tournant (24).

6. Dispositif de contraction selon la revendication 5, **caractérisé en ce que** le plateau tournant (24) présente un blocage du sens de rotation, qui bloque le mouvement de rotation dans un sens de rotation prédéfini en particulier depuis la zone du dispositif de refroidissement (15, 18) en direction du côté utilisateur du dispositif de contraction.

7. Dispositif de contraction selon la revendication 5 ou 6, **caractérisé en ce que** les logements (23) sont disposés dans une unité maintenue de façon amovible sur le plateau tournant (24).

8. Dispositif de contraction selon la revendication 7, **caractérisé en ce que** l'unité comprend un moyeu (61) sensiblement centré par rapport à l'axe de rotation du plateau tournant (24) et plusieurs corps de logement formant les logements (23), qui sont maintenus avec du jeu sur le moyeu (61) et sont guidés dans des guides (63) du plateau tournant (24).

9. Dispositif de contraction selon l'une quelconque des revendications 1 à 8, **caractérisé en ce que** le dispositif de chauffage (15, 18) présente une unité de bobine d'induction (15) guidée de façon coulissante sur une colonne de guidage (25) verticale avec un axe de bobine vertical, laquelle unité est reliée en particulier au moyen d'un câble (17) flexible à un générateur de courant d'induction (18) fixe par rapport à la colonne,
et **en ce que** sur l'unité de bobine d'induction (15) est disposé un bouton poussoir (46) actionné manuellement, au moyen duquel l'alimentation en courant d'induction de l'unité de bobine d'induction (15) peut être connectée et déconnectée selon son propre choix au moins pour un laps de temps limité.

10. Dispositif de contraction selon la revendication 9, **caractérisé en ce que** l'unité de bobine d'induction (15) peut être verrouillée sur la colonne de guidage (25) dans une position verticale pouvant être choisie au moyen d'un dispositif de blocage de verrouillage (29) pouvant être détaché par rapport à une prétension de ressort.

11. Dispositif de contraction selon la revendication 10, **caractérisé en ce que** le dispositif de blocage de verrouillage (29) présente pour le desserrage du verrouillage une poignée de manipulation (27) à utiliser d'une seule main et disposée à proximité du bouton poussoir (46).

12. Dispositif de contraction selon l'une quelconque des revendications 1 à 11, **caractérisé en ce que** le manchon de refroidissement (53 ; 53a) présente un élément de douille (67 ; 67a) destiné à l'appui par contact sur le porte-outil (3), qui présente une fente (73 ; 73a) traversant radialement la paroi de l'élément de douille (67 ; 67a) et s'étendant principalement axialement sur toute la longueur de la douille et est relié de façon fixe aux parois d'un canal à liquide de refroidissement ou forme de façon intégrale des parois ou des parties de paroi d'un canal à liquide de refroidissement (77 ; 77a).

13. Dispositif de contraction selon la revendication 12, **caractérisé en ce que** l'élément de douille (67 ; 67a) intérieur destiné à l'appui par contact sur le porte-outil (3) est recouvert de façon étanche, radialement et à l'extérieur, par un élément de douille (69 ; 69a) extérieur et une rainure (77 ; 77a) pour la formation du canal à liquide de refroidissement est formée intégralement dans l'élément de douille intérieur (67 ; 67a) ou/et l'élément de douille extérieur (69 ; 69a).

14. Dispositif de contraction selon la revendication 13, **caractérisé en ce que** la rainure (77 ; 77a) est formée en forme de méandre dans l'élément de douille intérieur (67; 67a) ou/et l'élément de douille extérieur (69 ; 69a).

15. Dispositif de contraction selon la revendication 14, **caractérisé en ce que** l'épaisseur de zones de matériau entre des parties, voisines et agencées les unes à côtés des autres, de la rainure (77 ; 77a) ou/et l'épaisseur de l'élément de douille (67 ; 67a) dans la zone du fond de la rainure (77 ; 77a) est inférieure à la dimension transversale de la rainure (77 ; 77a) radialement ou/et axialement par rapport au manchon de refroidissement (53 ; 53a).

16. Dispositif de contraction selon l'une quelconque des revendications 13 à 15, **caractérisé en ce que** la rainure (77 ; 77a) est prévue sur l'enveloppe extérieure de l'élément de douille (67 ; 67a) intérieur et l'élément de douille (69 ; 69a) extérieur a une enveloppe intérieure (71 ; 71a) complémentaire du contour d'enveloppe extérieure de l'élément de douille intérieur (67 ; 67a).

17. Dispositif de contraction selon l'une quelconque des revendications 13 à 16, **caractérisé en ce que** l'élément de douille (69) extérieur est conçu comme une douille fermée en forme d'anneau, sensiblement cylindrique.

18. Dispositif de contraction selon l'une quelconque des revendications 13 à 16, **caractérisé en ce que** l'élément de douille intérieur (67a) et l'élément de douille extérieur (69a) présentent des fentes (73a, 83) alignées, continues dans le sens radial et s'étendant principalement dans le sens axial.

19. Dispositif de contraction selon la revendication 18, **caractérisé en ce que** l'élément de douille intérieur (67a) et l'élément de douille extérieur (69a) sont conçus comme une douille de cône.

20. Dispositif de contraction la revendication 18 ou 19, **caractérisé en ce que** la fente ou les fentes du manchon de refroidissement (53a) est(sont) prétendue(s) par des moyens de ressort (84) dans le sens périphérique en direction de son rétrécissement.

21. Dispositif de contraction selon l'une quelconque des revendications 1 à 11, **caractérisé en ce que** le manchon de refroidissement (53b) présente plusieurs segments de douille (67b) voisins dans le sens périphérique, dont chacun est relié de façon fixe à des parois d'une partie de canal à liquide de refroidissement (77b) ou forme des parois ou parties de paroi de la partie du canal à liquide de refroidissement,
**en ce que** les segments de douille (67b) sont reliés élastiquement entre eux dans le sens périphérique et
**en ce que** les parties à liquide de refroidissement (77b) sont reliées entre elles pour former le canal à liquide de refroidissement, en particulier sont reliées entre elles en ligne.

22. Dispositif de contraction selon la revendication 21, **caractérisé en ce que** chaque segment de douille (67b) intérieur, destiné à l'appui par contact sur le porte-outil, est recouvert de façon étanche, radialement et à l'extérieur, par un segment de douille (69b) extérieur, et une rainure (77b) pour la formation de la partie du canal à liquide de refroidissement est formée intégralement dans le segment de douille intérieur (67b) ou/et dans le segment de douille extérieur (69b).

23. Dispositif de contraction la revendication 22, **caractérisé en ce que** la rainure (77b) est formée en forme de méandre dans le segment de douille intérieur (67b) ou/et le segment de douille extérieur (69b).

24. Dispositif de contraction selon la revendication 23, **caractérisé en ce que** l'épaisseur entre les parties, voisines et agencées les unes à côté des autres, de la rainure (77b) ou/et l'épaisseur du segment de douille (67b) dans la zone du fond de la rainure (77b) est inférieure à la dimension transversale de la rainure (77b) axialement ou/et radialement par rapport au manchon de refroidissement.

25. Dispositif de contraction selon l'une quelconque des revendications 22 à 24, **caractérisé en ce que** la rainure (77b) est prévue sur l'enveloppe extérieure du segment de douille (67b) intérieur et le segment de douille (69b) extérieur présente une enveloppe intérieure complémentaire avec un ajustement serré par rapport au contour d'enveloppe extérieure de l'élément de douille (67b) intérieur.

26. Dispositif de contraction selon l'une quelconque des revendications 22 à 25, **caractérisé en ce que** les segments de douille (69b) extérieurs sont conçus sensiblement comme des segments de cylindre annulaire.

27. Dispositif de contraction selon l'une quelconque des revendications 22 à 26, **caractérisé en ce que** les segments de douille (67b, 69b) sont reliés entre eux par au moins un ressort annulaire (91) périphérique.

28. Dispositif de contraction selon la revendication 27, **caractérisé en ce que** le ressort annulaire (91) est disposé dans des rainures, alignées entre elles dans le sens périphérique, des éléments de douille (67b) et les éléments de douille sont fixés axialement les uns par rapport aux autres.

29. Dispositif de contraction selon l'une quelconque des revendications 1 à 28, **caractérisé en ce que** le dispositif de chauffage par induction (15, 18) présente une unité de bobine d'induction (15) avec une bobine d'induction (21) pouvant être posée pour la dilatation thermique principalement de façon concentrique sur la zone de l'ouverture de logement (11) du porte-outil (3) et un dispositif de culasse (101) s'étendant axialement le long du pourtour extérieur de la bobine d'induction (21) et radialement le long d'au moins l'une des deux faces extrêmes axiales de la bobine d'induction (21), à base de matériau ferromagnétique, la zone, voisine de l'extrémité d'emboîtement d'outil et/ou éloignée de l'extrémité d'emboîtement d'outil, du dispositif de culasse (101) présentant plusieurs éléments de culasse (109), dépassant vers l'intérieur radialement sur le pourtour intérieur de la bobine d'induction (21) et guidés de façon mobile les uns par rapport aux autres, à base de matériau ferromagnétique, dont le débordement radial sur le pourtour intérieur de la bobine d'induction (21) peut être modifié au cours du service.

30. Dispositif de contraction selon la revendication 29, **caractérisé en ce que** les éléments de culasse (109) peuvent coulisser les uns par rapport aux autres ou sont guidés de façon pivotante.

31. Dispositif de contraction selon la revendication 30, **caractérisé en ce que** les éléments de culasse (109) se chevauchent dans le sens périphérique et sont guidés de façon coulissante radialement par rapport à la bobine d'induction (21).

32. Dispositif de contraction selon la revendication 30, **caractérisé en ce que** les éléments de culasse (109c, d) se chevauchent dans le sens périphérique et peuvent basculer autour d'axes de pivotement (119 ; 119a) agencés parallèlement à l'axe de la bobine d'induction (21).

33. Dispositif de contraction selon l'une quelconque des revendications 29 à 32, **caractérisé en ce que** les éléments de culasse (109) peuvent être réglés au moyen d'un élément de commande (113) commun et pouvant tourner sur le même axe que la bobine d'induction (21), lequel élément est couplé par des dispositifs surfaces de commande-suiveur de came (115, 117) avec les éléments de culasse (109).
